# EUROPEAN PATENT APPLICATION

(11) **EP 2 332 627 A2**
(43) Date of publication of application: **15.06.2011**
(21) Application number: 10290648.4
(22) Date of filing: 10.12.2010
(51) Int. Cl.: B01D 45/06, B01D 45/08, F02M 35/022

(54) **Air filter with an air pillow system having liquid separation capabilities**

(30) Priority: 10.12.2009 US 635232
(71) Applicant: MANN+HUMMEL GmbH, 71638 Ludwigsburg (DE)
(72) Inventor: Christelle Ratajczack, 53260 Forcé (FR); Champion, Arnaud, 53000 Laval (FR)

(57) **Abstract**

An air pillow liquid separation system includes housing with a plurality of air pillow pockets arranged within. An airflow stream enters the housing and is redirected, separating entrained liquids from the airflow stream by inertia effects. The separated liquids are directed over the air pillow pockets where the liquids collect on the air pillow pocket ribs forming droplets flowing to a drain opening in the housing.

## Description

### CROSS REFERENCE TO RELATED APPLICATIONS

The present patent application claims priority from U.S. non-provisional patent application No. 12/635,232, filed December 10, 2009. All of the contents of U.S. non-provisional patent application No. 12/635,232 are incorporated herein by reference and to the fullest extent of the law.

### TECHNICAL FIELD

This invention is related to an air filter with an air pillow airflow guidance system provided with water separation capabilities.

### BACKGROUND OF THE INVENTION

Air intake systems for motor vehicles may include an air intake tract in which an air filter housing or other housing (for example, an acoustic resonance chamber, air plenum, etc.) is arranged. Air filters are used to provide a necessary source of particulate free filtered air for safe operation of an internal combustion engine. Air filters perform a necessary function in the removal of contaminants from the intake air stream. Various classes of undesired contaminants in the air intake stream include particulate as well as the potential presence of entrained water droplets or moisture.

While various types of filtration media may be, at least initially, somewhat effective in capturing entrained liquid droplets from the air stream, portions of the filter media may quickly become saturated with liquids. Portions of the filter media saturated with liquids (for example, water) become impassable to air flow resulting in a restriction of airflow due to a decreased effective filter surface area together with an undesirable increase in the pressure loss across the filter element. Impregnation of the filter element with water permits water to reach the clean side of filter element. The migration of water through the filter element to the clean side may compromise the flow signal from the air flow meter (AFM) sensor resulting in disturbance of engine operation or the early degradation of engine components or sensors. It is known that if entrained water can be separated before the intake air stream reaches the filter element, then the liquid saturation of filter media and the resulting increased restriction to air flow and the compromise of sensors and components on the clean side of the air intake tract can be avoided.

An air intake tract may include an air filtration system in which an air filter element, such as a pleated panel filter element, is enclosed in an air cavity within an air filtration housing and divides the cavity into a clean side and a dirty side. The air filtration housing may include an air inlet and air outlet port or connection in communication with opposing sides of the air cavity and filter element.

In some configurations the air filtration element has a larger surface area than the cross sectional area of either the inlet or outlet ports on the filter housing providing a more tortuous than desired airflow pattern in the housing and resulting in the generation of airflow turbulence within the air filter housing. The positioning and/or alignment of the air inlet and/or outlet ports on the housing may require the airflow to be redirected or changed in direction with the filter housing, further contributing to this tortuous airflow path and generation of undesired airflow recirculation patterns or turbulence. These flow recirculation patterns consume a portion of the kinetic energy from the airflow stream resulting in increased resistance to airflow and increased pressure loss in the filter housing.

A need remains in the art for an air intake system that incorporates air pillow flow guidance features operative to invisibly guide the airflow along a low-loss path, thereby reducing airflow turbulence and airflow resistance or pressure drop. There is a further need to configure these air flow guidance countermeasures to additionally serve to remove entrained liquid droplets from the air stream to prevent accumulation of liquids in the air filter element and avoid the increased turbulence, increased flow restriction and increased pressure losses that result from liquid contamination of the air filter element media.

### SUMMARY OF THE INVENTION

It is one objective, at least in some embodiments, to provide an air filter system with an air pillow system configured to separate entrained liquids from the air stream before the liquids reach the filter element.

It is another objective of the present invention to reduce the pressure drop or flow restriction through an air filter system by reducing kinetic energy consuming air recirculation patterns and air turbulence within the filter housing.

It is another objective of the present invention to minimize the chance of airstream entrained liquid contaminating the filter media.

It is another objective, in some embodiments, to size and configure the air pillow pockets to additionally serve as tuned resonance chambers within the housing to provide tuned acoustic countermeasures, eliminating the need to provide additional resonance chambers of the prior art.

In various aspects of the invention, an air pillow flow guidance system is incorporated into a housing arranged in an air intake tract, possibly the air intake tract of an internal combustion engine, a compressor or other air consuming device. The air pillow system includes a plurality of inwardly extending ribs arranged in a distally spaced arrangement and closeably abutting onto interior wall(s) of the housing with the ribs protruding inwardly into the cavity towards an airflow stream to be guided. The ribs are spaced and configured to form at least one or more air pillow pockets with each pocket having an open end opening towards the airflow stream to be guided. Each rib is configured with an inwardly extending length selected to correlate with a boundary of a desired airflow glide path of the airflow stream. The air masses formed in the air pillow pockets are operative to guide the airflow stream along the desired airflow glide path.

In some aspects of the invention, the housing is an air filter housing. An air filter element is received into an air flow cavity of the housing dividing the cavity into a clean side and a dirty side. The air pillows are arranged in the dirty side of the cavity.

In some aspects of the invention, at least a portion of the ribs extend in a direction transverse relative to the airflow glide path of an airflow stream directed over the air pillow pockets.

In aspects of the invention, the air pillow system is arranged in the dirty side of an air filter housing and upstream of an air filter element. The air pillow system is configured to provide separation of entrained liquids from the incoming airflow stream entering the air filter housing to be filtered by the filter element. The housing includes a liquid drain opening arranged at a lower portion of the housing cavity and configured to drain separated liquids from the housing. Entrained liquids are removed by the air pillow pockets before the airflow stream reaches the air filter.

In another aspect of the invention, an airflow inlet port is provided on the housing. The air inlet port delivers a first airflow stream into the cavity in a first direction. The housing may include a redirection wall or other redirection feature against which the airflow stream may impinge and be redirected into a second airflow stream in a second direction, differing from the first direction. The second airflow stream may be redirected into another direction to exit the housing. The entrained liquids are separated by inertia effects of the flow redirection or redirections.

In another aspect of the invention, the air pillow pockets have an open upper end facing an airflow stream containing the separated entrained liquids from the airflow redirection. Entrained liquids are collected on the walls of the air pillow pockets with the liquid forming droplets flowing down the ribs to the drain opening,

In another aspect of the invention, the air pillow pocket ribs are aligned to substantially radially converge towards the liquid drain opening.

In another aspect of the invention, at least a portion of the air pillow pockets are sized and configured to also operate as acoustic resonance chambers.

In another aspect of the invention, the housing is made of a moldable plastic material and the air pillow ribs are molded in one piece with the housing as a unitary one-piece component.

In another aspect of the invention, the air pillow ribs are spaced apart along the airflow glide path over the air pillow open ends with the ribs extending in a direction traverse to the airflow glide path.

In another aspect of the invention, a method is disclosed for separating liquids from an air stream in a filter housing. The method includes the steps of providing a filter housing defining an airflow cavity within the filter element separating the cavity into a clean side and a dirty side. A plurality of air pillow pockets are formed between ribs provided in the cavity. An airflow stream is introduced into the housing in a first direction. The airflow stream is redirected within the housing into another direction. Entrained liquids are separated from the airflow stream by inertia effect of the redirection. An airstream having the separated liquids is flowed over the air pillow pocket open ends. The separated liquids are collected on the ribs of the air pillow pockets and drained away from the airstream.

A side benefit of the relatively deep, contoured and spaced air pillow pocket ribbing is in the improved structural support of portions of the air induction system housing, thereby stiffening the walls of the housing and reducing the radiation of engine noise from the air intake tract through the housing.

The above features and advantages and other features and advantages of the present invention are readily apparent from the following detailed description of the best modes for carrying out the invention when taken in connection with the accompanying drawings.

### BRIEF DESCRIPTION OF THE DRAWINGS

The accompanying Figures, where like reference numerals refer to identical or functionally similar elements throughout the separate views and which together with the detailed description below are incorporated in and form part of the specification, serve to further illustrate various embodiments and to explain various principles and advantages all in accordance with the present invention.

Features of the present invention, which are believed to be novel, are set forth in the drawings and more particularly in the appended claims. The invention, together with the further objects and advantages thereof, may be best understood with reference to the following description, taken in conjunction with the accompanying drawings. The drawings show a form of the invention that is presently preferred; however, the invention is not limited to the precise arrangement shown in the drawings.

Figure 1 is a side sectional view of a prior art air induction system filter housing illustrating air recirculation patterns and turbulence in airflow through the housing;

Figure 2 is a side sectional view of airflow patterns through an air induction system housing provided with air pillow flow guidance technology, illustrating one embodiment of the low-loss airflow guidance concept;

Figure 3 is a schematic side view of an air induction system filter housing provided with air pillow pocket flow guidance and liquid separation technology consistent with the present invention;

Figure 4 is a schematic top view of an air induction system filter housing of Figure 3.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the present invention.

### DETAILED DESCRIPTION

Before describing in detail embodiments that are in accordance with the present invention, it should be observed that the embodiments reside primarily in combinations of method steps and apparatus components related to an air intake tract housing equipped with an air pillow airflow guidance system having liquid separation capabilities. Accordingly, the apparatus components have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description herein.

In this document, relational terms such as first and second, top and bottom, and the like may be used solely to distinguish one entity or action from another entity or action without necessarily requiring or implying any actual such relationship or order between such entities or actions. The terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus- An element preceded by "comprises ... a" does not, without more constraints, preclude the existence of additional identical elements in the process, method, article, or apparatus that comprises the element.

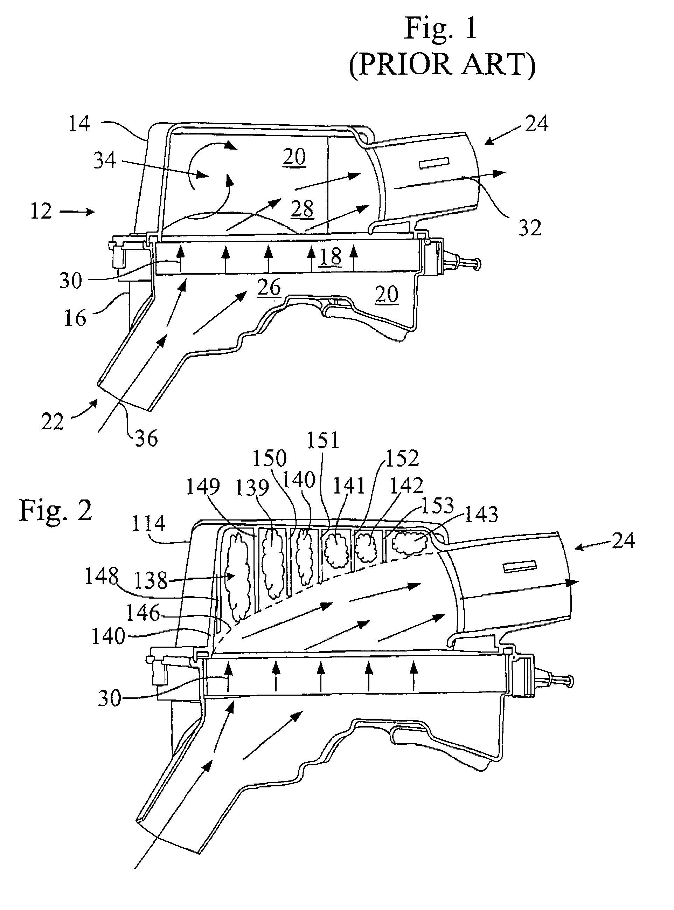

Figure 1 is a side sectional view of a prior art air induction system filter housing illustrating air recirculation patterns and turbulence in airflow through the housing.

In Figure 1, an air filter element 18, for example a pleated panel filter element, is installed into the base 16 of the air filtration housing 12. The base is configured and adapted to receive thereon a housing cover 14. The cover 14 and base 16 6 together define an enclosed air cavity 20 with the air filter element dividing the cavity 20 into a clean side 28 and a dirty side 26. In the prior art example of Figure 1, an airstream (arrows 36) enters dirty side 26 of the air cavity 20 in the base 16 of the filter housing l2 through the air inlet port 22 and distributes within the dirty side 26 of the air cavity 20 to flow through the air filtration element 18. The airstream may substantially flow through the air filter element directly between the dirty and clean faces of the air filter element 18 8 according to the arrows 30.

Continuing with Figure 1, the airflow exits the air filter element 18 and enters the clean side 28 of the air cavity 20. Airflow exiting the filter element 18 in the clean side 28 cavity is not sufficiently guided and is therefore free to form recirculation patterns 34 or turbulence within the cavity of the housing cover 14. The airflow stream path within the cover 14 follows a tortuous path in which recirculation flow patterns (for example, recirculation patterns 34) are formed in the side stream of the main airflow 32 in its progress towards the outlet port 24.

Certain features of the housing 12 contribute to the airflow recirculation patterns 34 and pressure drop through the housing. Contributing features include the smaller cross sectional area of the outlet port 24 relative to the outlet face area of the air filter element 18 resulting in airflow necking down rather abruptly when entering the outlet port 24. Another contributing feature is that the flow direction of the airflow through the outlet port 24 is not angularly aligned with the airflow entering the clean side cavity 28 (in this example, airflow 30 through the filter element 18).

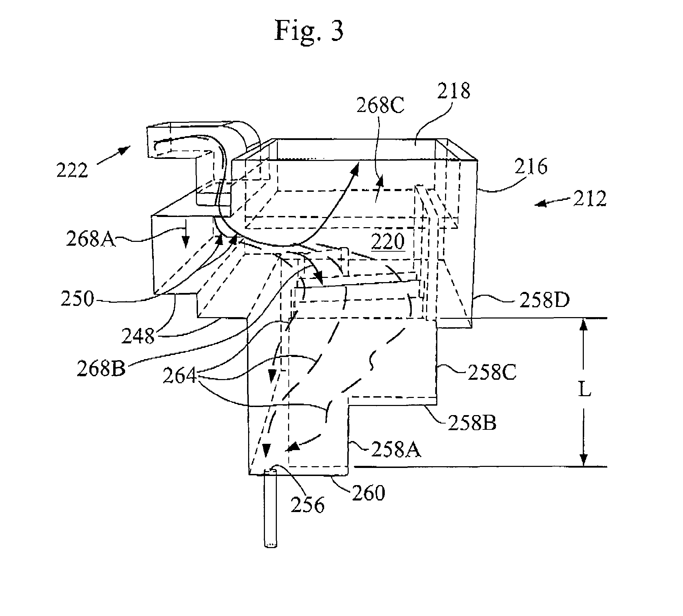

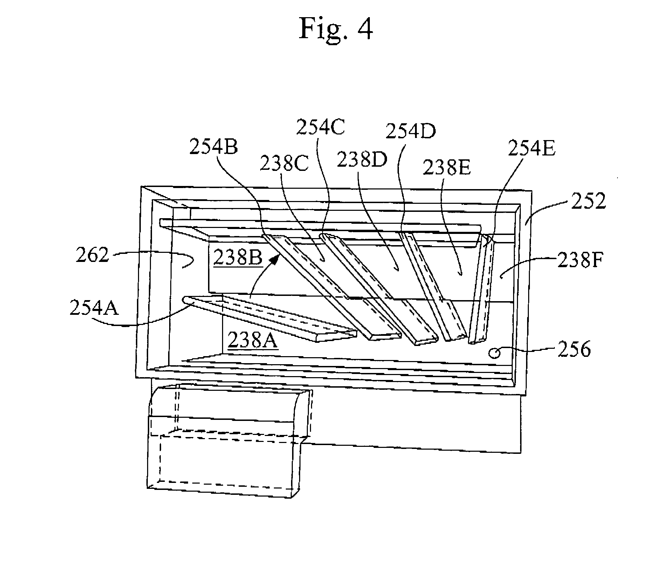

Figure 2 is a side sectional view of airflow patterns through an air induction system housing provided with air pillow pocket technology, illustrating the air pillow flow guidance concept. Air pillows 138-143 are figuratively or allegorically illustrated as clouds to aid in understanding of the inventive concept. Also, for better understanding, the housing of Figure 2 has the general form of the prior art housing of Figure 1 but modified to include the air pillow technology of the present invention. The air filter housing of Figure 2 shows the air pillow pockets 138-143 arranged at the outlet or clean air side of the filter element 18 and downstream of the filter element 18, however it is to be understood that the air pillow pockets (such as 138-143) may instead be advantageously arranged in the dirty side of the filter housing upstream of the filter element l8, as will be discussed with Figures 3 and 4 below.

In the embodiment of Figure 2, the cover 114 is provided with a plurality of air pillow pockets 138-1.43 with the air pillow pockets defined by ribs having a contoured height or pockets having a varying depth with the depth of individual air pillow pockets varying from the cover wall 140 to the outlet port 24 in a contoured manner to provide a low-loss airflow glide path that minimized turbulence.

The contoured depth of the air pillow pockets 138-143 are chosen to correlate with the boundary l46 (shown by a dashed line) of a desired low-loss airflow glide path of air, in the illustration flowing from the clean side cavity 28 into the outlet port 24. The air pillow pockets 138-143 are substantially/preferably flow-static air masses (or air pillows) separated from the airflow glide path 146. The transverse arrangement of the ribs relative to the airflow is important to preventing airflow (and air recirculation paths) in the air pillow pockets.

Air pillow pockets 138-143 are defined by a plurality of inwardly extending ribs secured to the inside surfaces of the filter housing 114 and arranged in a distally spaced arrangement with the ribs 149-153 closeably abutting against the walls of the housing. The ribs form a plurality of air pillow pockets with each pocket having an open end facing inwards (by which we mean towards the cavity 28). The air pillow pockets open generally to impinge the airflow such that the airflow 30 impinging upon the air pillows 138-143 is guided in a desired direction. In the embodiment of Figure 2, the airflow is guided by the air pillow pockets to flow towards the outlet port 24.

One motivation for the present invention is to provide a solution to the perpetual problem that plagues every engine air induction system, a balance between airflow restriction and acoustics. One inspiration of the present invention arises from studies of airflow across the back of a pickup truck bed. It turns out that when the truck is s driven with the pickup tailgate down then the vehicle fuel economy actually decreases due to increased air drag. This result may seem counter-intuitive at first, but upon further investigation it is discovered that with the truck tailgate in the raised position an "air pillow" is formed in the truck bed that guides the airflow over the truck bed and gate.

In one study by the University of Michigan, students placed a GM truck in a wind tunnel and performed various tests with differing modifications to reduce air drag. The study found that driving with the truck tailgate removed (or down) increased air drag by 3.92% relative to driving with the tailgate up.

The air mass formed in the truck bed by the closed tailgate may be interpreted to act as a low drag buffer thus guiding and streamlining airflow over the vehicle tailgate, reducing overall drag on the vehicle and improving fuel economy. Similar techniques may be applied to components of an air induction system to achieve a reduction of airflow pressure drop across the air induction system.

Building upon these findings, the air pillow technology of the present invention provides an invisible air guiding and air flow impingement surface in an air induction system which may be configured to guide or redirect airflow along a desired low-loss airflow glide path, a path which may be chosen to reduce or eliminate kinetic energy consuming airflow recirculation and turbulence patterns and smoothly transition airflow direction.

In the present invention, the "air pillow" airflow guides may be advantageously provided in existing space within the air intake track component or housing, for one example, an air filtration housing. Air pillow pockets 138-143 advantageously provide quiet pockets or areas of relatively slow moving, non-excited, non-turbulent airflow. As the airflow is relatively quiet in the region of the air pillow pockets, liquid droplets or moisture entrained in the air stream may tend to deposit on the ribs 148-153 of the air pillow pockets. As the airflow is relatively quiet in the region of the air pillow pockets 138-143, the deposited moisture is less likely to be re-entrained back into the air flow and therefore can be separated from the air stream. This behavior is leverage to separate entrained liquids from the air stream as will be discussed further below.

Also in some embodiments, the air pillows may be configured and sized in the air intake tract to serve an additional role, a role as acoustic resonance chambers. These chambers may be configured to provide acoustic countermeasures. For example, to provide desired attenuation of sound levels in the air intake tract at chosen frequencies. These countermeasures are integrated by design into the air pillow airflow guidance system to achieve desirable acoustic results without adding materials or providing other acoustic countermeasure devices.

The discussion is now directed to the air pillow system with entrained liquid separation capabilities, an exemplary embodiment provided in Figures 3 and 4. Figure 3 is a schematic side view of an air induction system filter housing 216 provided with air pillow pocket flow guidance and liquid separation technology consistent with the present invention. Figure 4 is a schematic top view of the air induction system filter housing of Figure 3. In Figure 3 only the base portion of the filter housing 216 is shown. Internal (or hidden) features of the filter housing are shown in hidden lines.

A filter housing cover (not shown) is detachably connected to the top portion of the filter housing 216 along the housing rim 252 circumferentially surrounding the Filter element 218. For simplicity the housing cover is not shown as its configuration is not critical to the inventive concepts presented herein. The filter element 218 is shown installed into the filter housing 216 and is removable for service through the open top of the housing 216 (normally closed over by the removable housing cover, not shown).

A plurality of distally spaced inwardly extending ribs 254A-E is arranged within the cavity 220 of the housing 216. The illustrated ribs have a general planar wall-like structure, although the ribs may instead have a curved shape in other embodiments.

Preferably the ribs are positioned and arranged to substantially radially converge towards the liquid drain opening 256 provided at the bottom of the cavity 220 and extending through the bottom wall 1 260 of the housing 216. The bottom wall 260 of the housing may include a drainage trough or a sloped floor designed to encourage liquid to flow from the housing toward the drain opening 256, although the invention may be realized without these features.

The ribs 254A-E extend radially outwardly from said drain opening 256 to closeably abut against rear sidewalls 258A, B and C as well as closeably abut against the bottom wall 260 of the housing 216 thereby forming air pillow pockets 238A-F.

The air pillow pockets 238A-F are each closed along their bottom edges by bottom wall 260 and eventually further closed along their radially outwardly arranged side (radially outwardly relative to drain opening 256) by housing sidewalls 258A-C and/ or sidewall 262 or 258D if necessary.

The air pillow pockets 238A-F each have an open upper end opening towards and facing into an airflow glide path 264. The air pillow pocket ribs 254A-E each have an inwardly length L selected to correlate the upper open ends of the air pillow pockets 238A-F with the contour of the desired airflow glide path 264. The airflow glide path 264 substantially corresponds to an airflow glide path for collection of liquids removed from the intake air stream 250 as will be discussed in more detail below.

Each air pillow pocket 238A-F defines a respective region of substantially quiet, non-turbulent air mass between the respective ribs 254A-E of each air pillow pocket. Preferably the ribs 254A-E are arranged to substantially traverse to the airflow glide path 264 such that the ribs 254A-E prevent major portions of the airflow stream 264 from substantially flowing within the air pillow pockets, thereby providing desired flow-quiet substantially non-turbulent conditions in air pillow pockets 238A-F for removal of entrained liquids.

In Figures 3 and 4 ribs 254A-E have ends facing the drain opening 256 and spaced at a distance from the housing front sidewall 266, thereby providing the air pillow pockets 238A-F with open ends (open to air or liquid flow) facing the drain opening 256. However, in other embodiments the end of the air pillow pockets 238A-F may be configured with ends facing the drain opening 256 that are only partially or substantially closed but not totally closed, thereby providing further closure to the air pillow pockets 238A-F and further isolating the air mass in the air pillow pocket 238A-F from airflow and air recirculation turbulence that may be present in the housing.

As discussed previously with Figure 2, the quiet air mass in each air pillow pocket 238A-F operates to guide an airflow stream 264 that may have entrained liquids along the low-loss airflow glide path 264 over the open upper ends of the air pillow pockets 238A-F.

Now referring particularly to Figure 3, an airflow stream 250 enters the housing 216 through the air inlet port 222 and flows into the housing cavity 220. The air inlet port 222 directs the airflow stream 250 in a first downwardly direction 268A where the airflow stream is redirected to a lateral direction 268B by a redirecting member such as housing wall steps 248. To exit the housing 216 through the air filter element 218 the airflow stream 250 continues to change direction or is redirected generally to direction 268C where it enters the dirty side of the air filter element 218. As the airflow changes direction, entrained liquids in the airstream 250 are separated from the airstream by inertia effects, the entrained liquids are carried forward by flow stream generally along the airflow glide path 264 over the open upper ends of the air pillow pockets 238A-F.

Separated and entrained liquids in airstream 264 collect onto the air pillow pocket ribs 254A-E where the collected liquid form droplets and flows down the ribs 254A-E to exit the housing through the liquid drain opening 256. Advantageously the separated liquid collecting on the air pillow pocket ribs 254A-E is collected in the quiet non-turbulent air mass of the air pillow pockets 238A-F and isolated from the more turbulent air flow conditions occurring above the air pillow pockets in the housing 216 6 between the air inlet port 222 and the air filter element 218. As the liquid collected on the ribs 254A-E is isolated from turbulent air flow conditions, the collected liquid advantageously does not become re-entrained into the airstream and is therefore removed before it may contaminate or wet the filter media of air filter 218.

The presence of liquids such as water on the filter media is undesirable as the presence of liquid captured in the filter media tends to occlude portions of the filter element 218 from air flow, resulting in a reduction in the available filter surface area with a resulting increase in the pressure loss across the filter element. Also it can lead to the undesirable migration of water to intact tract and components on the clean side of the air filter element.

As discussed in detail earlier with Figure 2, in some embodiments a portion of the air pillow pockets may additionally be configured to operate as acoustic resonance chambers in addition to the flow guidance and liquid collection functions.

In some embodiments the ribs 254A-E may be molded in one piece with the filter housing 216 as a unitary component of the housing 216, thereby reducing component count, assembly and manufacturing cost.

In the foregoing specification, specific embodiments of the present invention have been described. However, one of ordinary skill in the art appreciates that various modifications and changes can be made without departing from the scope of the present invention as set forth in the claims below. Accordingly, the specification and figures are to be regarded in an illustrative rather than a restrictive sense, and all such modifications are intended to be included within the scope of the present invention. The benefits, advantages, solutions to problems, and any element(s) that may cause any benefit, advantage, or solution to occur or become more pronounced are not to be construed as a critical, required, or essential features or elements of any or all the claims. The invention is defined solely by the appended claims including any amendments made during the pendency of this application and all equivalents of those claims as issued.

## Claims

1. An air pillow liquid separation system, comprising:
a housing defining an airflow cavity therein, the housing including:
- an airflow inlet port providing an airflow stream into the cavity, wherein said airflow stream is redirected within said cavity into a differing second direction, said redirection separating entrained liquids into a second stream by inertia effects;
- a plurality of inwardly extending ribs arranged in a distally spaced arrangement within the cavity;
- wherein said ribs form a plurality of air pillow pockets between adjacent ribs or between said ribs and an adjacent housing wall,
- wherein each air pillow pocket has an open upper end facing said second stream of separated entrained liquids;
- wherein said air pillow pockets each defines a substantially quiet non-turbulent air mass separated from airflow turbulence in said housing, and
- wherein the separated liquids are collected on said ribs, the liquid forming droplets flowing down said ribs to a drain opening in said housing.

2. The air pillow liquid separation system according to claim I, wherein said air inlet port delivers the airflow stream into the cavity in a first direction,
wherein the housing includes at least one wall operative to redirect the airflow stream in a second direction,
wherein portions of the second direction airflow are redirected into a third direction to exit said housing, said third direction substantially opposing said first direction, said redirection separating entrained liquids by inertia effects.

3. The air pillow liquid separation system according to claim 1,
wherein each rib is configured with a length inwardly extending towards said open upper end, said length selected to correlate with a boundary of ain airflow glide path for collection of liquids in the air pillow pockets, and
wherein the air pillow pockets reduce at least one of: airflow stream recirculation turbulence and airflow pressure loss in the housing.

4. The air pillow liquid separation system according to claim 1,
wherein said ribs are aligned to substantially radially converge towards said liquid drain opening.

5. The air pillow liquid separation system according to claim 1,
wherein said housing is configured and adapted to receive an air filter element therein, said air filter element dividing said cavity into a clean filtered side and a dirty side;
wherein said ribs and said air pillow pockets are arranged in said clean side of said cavity, and
wherein said entrained liquid is removed by said air pillow pockets before said airflow stream reaches said air filter.

6. The air pillow liquid separation system according to claim 1,
wherein at least a portion of said air pillow pockets are sized and configured to also operate as acoustic resonance chambers.

7. The air pillow liquid separation system according to claim 1,
wherein said ribs are molded in one piece with said housing as a unitary component.

8. The air pillow liquid separation system according to claim 1,
wherein said ribs are spaced apart along said airflow glide path, said ribs extending in a direction traverse to said airflow glide path.

9. The air pillow liquid separation system according to claim 1,
where in said ribs closeably abut a bottom wall and at least one side wall of said housing.

10. The air pillow liquid separation system according to claim 1,
wherein said ribs are substantially planar.

11. The air pillow liquid separation system according to claim 1,
wherein said drain opening is arranged in a bottom wall of said housing; and said bottom housing wall includes at least one of: a floor sloped towards said drain opening and a draining groove collecting liquids to said drain opening.

12. A method of separating liquids from an air stream in a filter housing, comprising:
providing a filter housing defining an airflow cavity within and having a filter element separating said cavity into a clean side and a dirty side;
providing a plurality of air pillow pockets formed between ribs provided in said cavity;
introducing an airflow stream into said housing in a first direction;
redirecting said airflow stream within said housing into another direction;
inertially separating liquids from said airflow stream by said redirecting step;
flowing said separated liquids as an air stream over opening of said air pillow pockets; and
collecting said separated liquids on said ribs of said air pillow pockets.

13. The method of claim 12 wherein in said providing a plurality of air pillow pockets, said ribs are spaced apart along a path of said separated liquids airflow stream and said ribs extend in a direction traverse to said separated liquids airflow stream.
